(19)

Europäisches
Patentamt

European
Patent Office

Office européen
des brevets

(11) **EP 4 524 270 A1**

(12) **EUROPEAN PATENT APPLICATION**
published in accordance with Art. 153(4) EPC

(43) Date of publication:
**19.03.2025 Bulletin 2025/12**

(21) Application number: **23835231.4**

(22) Date of filing: **12.06.2023**

(51) International Patent Classification (IPC):
***C22B 19/30*** (2006.01)   ***C22B 7/00*** (2006.01)

(52) Cooperative Patent Classification (CPC):
**C22B 7/00; C22B 19/30**

(86) International application number:
**PCT/JP2023/021718**

(87) International publication number:
**WO 2024/009695 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.07.2022 JP 2022108133**

(71) Applicant: JFE Steel Corporation
**Tokyo 100-0011 (JP)**

(72) Inventors:
- **YOSHIDA, Hironori**
  **Tokyo 100-0011 (JP)**
- **ODA, Nobuhiko**
  **Tokyo 100-0011 (JP)**
- **HARADA, Akifumi**
  **Tokyo 100-0011 (JP)**
- **NAKAI, Yoshie**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **METHOD FOR REMOVING ZINC AND APPARATUS FOR REMOVING ZINC**

(57)   A dezincing method is provided that can remove zinc by designing the heating temperature for a galvanized steel sheet in consideration of the oxidation of lead.

In a dezincing method for removing zinc from a galvanized steel sheet stored in a container, the temperature and the oxygen partial pressure inside the container satisfy relationships of expressions (1) to (3) below:

$$T \geq 17.6\log(P_{O2}) + 1031 \quad \cdots (1)$$

$$700 \leq T \leq 1200 \quad \cdots (2)$$

$$P_{O2} \leq 10.13 \quad \cdots (3).$$

In expressions (1) to (3), T is the temperature (°C) inside the container, and $P_{O2}$ is the oxygen partial pressure (kPa) inside the container.

EP 4 524 270 A1

FIG. 1

**Description**

Technical Field

The present invention relates to a dezincing method and a dezincing apparatus for removing zinc from a galvanized steel sheet.

Background Art

Galvanized steel sheets have superior corrosion resistance and are used in various applications including automobile bodies and building materials. To make effective use of steel materials, numerous galvanized steel sheets and other steel materials on the market are recently recovered as scrap and are reused as raw materials for electric arc furnace steelmaking processes or converter steelmaking processes. Furthermore, electric arc furnace steelmaking processes starting from scrap are more effective in reducing $CO_2$ emissions than blast furnace-to-converter integrated steelmaking processes that produce steel from iron ore. Thus, the use of scrap raw materials including galvanized steel sheets is expected to further increase in the future.

The molten iron in the above steelmaking processes reaches as high temperatures as about 1700°C. Thus, zinc contained in galvanized steel sheets volatilizes and mixes into the ironmaking dust or migrates into the molten iron. Zinc has a higher saturated vapor pressure than molten iron and volatilizes easily. Thus, a major proportion of zinc present in the molten iron is ultimately accumulated in the ironmaking dust.

In recent years, reuse of byproducts, such as ironmaking dust, as iron sources has been technically increasingly developed. For example, ironmaking dust is reused in sintering of iron ore. However, the reuse of zinc-containing ironmaking dust in the sintering process results in accumulation of zinc in the sintered ore. Steelmaking from zinc-containing sintered ore as a raw material in a blast furnace generates metallic zinc vapor in the blast furnace, which is then cooled and is precipitated as metallic zinc. The metallic zinc adheres to the inside of the furnace and grows to deteriorate the gas permeability inside the blast furnace. Furthermore, zinc that remains unremoved is picked up by the molten iron. These facts make it difficult to apply galvanized steel sheets to recycling.

If the zinc concentration in ironmaking dust is 50 mass% or more, it will be possible to use the ironmaking dust as a raw material for crude zinc production and to sell the ironmaking dust to zinc refining companies. In general, however, the zinc concentration is about 1 mass% at most in blast furnace dust and converter dust, and is about 10 to 40 mass% at highest in electric arc furnace dust. Thus, these dusts are hardly applicable as raw materials for crude zinc production processes. These zinc-containing dusts need to be disposed of as industrial wastes. This fact is one of the factors that raise the costs of manufacturing steel materials.

Against the above background, studies are underway on techniques that remove zinc from galvanized steel sheets beforehand. For example, Patent Literature 1 discloses a method that removes zinc contained in scrap raw materials by supplying superheated steam into a processing chamber containing the scrap.

Citation List

Patent Literature

PTL 1: Japanese Unexamined Patent Application Publication No. 2018-145499

Summary of Invention

Technical Problem

When heated, zinc is oxidized by oxygen in the air and forms zinc oxide at a superficial portion of a zinc coating. The zinc oxide inhibits dezincification through volatilization. In order to efficiently remove zinc, it is therefore necessary to design the heating temperature for zinc in consideration of the influence of zinc oxidation. Patent Literature 1 does not take into consideration the influence of zinc oxidation at all. Thus, the method disclosed in Patent Literature 1 has a problem in that zinc oxidation sometimes interferes with efficient zinc removal.

The present invention has been made in view of the problems discussed above. It is therefore an object of the present invention to provide a dezincing method and a dezincing apparatus that can remove zinc by specifying the heating temperature for a galvanized steel sheet in consideration of the oxidation of zinc.

Solution to Problem

Approaches to solving the above problems are as follows.

[1] A dezincing method for removing zinc from a galvanized steel sheet stored in a container, wherein the temperature and the oxygen partial pressure inside the container satisfy relationships of expressions (1) to (3) below:

$$T \geq 17.6\log(P_{O2}) + 1031 \quad \cdots (1)$$

$$700 \leq T \leq 1200 \quad \cdots (2)$$

$$P_{O2} \leq 10.13 \quad \cdots (3)$$

in expressions (1) to (3), T is the temperature (°C) inside the container, and $P_{O2}$ is the oxygen partial pressure (kPa) inside the container.
[2] The dezincing method according to [1], wherein the galvanized steel sheet is kept stored in the container for 5 minutes or more.
[3] The dezincing method according to [1] or [2], wherein the inside of the container is heated with sensible heat of exhaust gas generated from a melting furnace.
[4] The dezincing method according to [3], wherein the inside of the container is heated with sensible heat of molten iron contained in the melting furnace.
[5] The dezincing method according to [3], wherein the exhaust gas satisfies relationships of expressions (4) to (6) below and is supplied into the container,

$$T_g \geq 17.6\log(P_{O2,g}) + 1031 \quad \cdots (4)$$

$$700 \leq T_g \leq 1200 \quad \cdots (5)$$

$$P_{O2,g} \leq 10.13 \quad \cdots (6)$$

in expressions (4) to (6), $T_g$ is the temperature (°C) of the exhaust gas, and $P_{O2,g}$ is the oxygen partial pressure (kPa) in the exhaust gas.
[6] A dezincing apparatus for removing zinc from a galvanized steel sheet, the dezincing apparatus including a container configured to contain a galvanized steel sheet, a thermometer that measures a temperature inside the container, a component concentration meter that measures a concentration of a gas component in the container, and a control unit that controls the temperature inside the container and the concentration of a gas component in the container, wherein the control unit controls the temperature and the oxygen concentration inside the container so as to satisfy relationships of expressions (1) to (3) below:

$$T \geq 17.6\log(P_{O2}) + 1031 \quad \cdots (1)$$

$$700 \leq T \leq 1200 \quad \cdots (2)$$

$$P_{O2} \leq 10.13 \quad \cdots (3)$$

in expressions (1) to (3), T is the temperature (°C) inside the container, and $P_{O2}$ is the oxygen partial pressure (kPa) inside the container.
[7] The dezincing apparatus according to [6], wherein the container is connected to an exhaust gas passage of a melting furnace configured to contain molten iron, and the control unit controls the temperature and the oxygen concentration inside the container by controlling a flow rate of exhaust gas flowing into the container. Advantageous Effects of Invention

According to the present invention, a galvanized steel sheet can be efficiently dezinced by virtue of specifying the heating temperature and the oxygen partial pressure in a container containing the galvanized steel sheet in consideration of the oxidation of zinc.

Brief Description of Drawings

[Fig. 1] Fig. 1 is a schematic sectional view of a dezincing apparatus capable of carrying out a dezincing method according to an embodiment.

[Fig. 2] Fig. 2 is a schematic sectional view of a dezincing apparatus capable of carrying out a dezincing method according to an embodiment.

[Fig. 3] Fig. 3 is a graph illustrating the ranges of temperature and oxygen partial pressure inside a container that satisfy the relationships of expressions (1) to (3).

[Fig. 4] Fig. 4 is a graph illustrating the ranges of exhaust gas temperature and oxygen partial pressure that satisfy the relationships of expressions (4) to (6). Description of Embodiments

First, the experimental results that have led to the idea of the present invention will be described. The present inventors carried out heat treatment on galvanized steel sheets using a laboratory-scale electric resistance furnace and an actual electric arc furnace facility. In the treatment, conditions, such as temperature and atmosphere conditions during the heat treatment, and heat treatment time, were variously changed, and the zinc removal ratio in the galvanized steel sheets after the heat treatment was studied. As a result, the present inventors have found that zinc is effectively removed from the galvanized steel sheet by heat-treating the galvanized steel sheet at specific temperatures and specific oxygen partial pressures.

First, the temperature inside the container in which the galvanized steel sheet is heat-treated, and the oxygen partial pressure in the atmosphere inside the container will be described. The temperature inside the container in which the galvanized steel sheet is heat-treated, and the oxygen partial pressure in the atmosphere inside the container need to satisfy the relationships of expressions (1) to (3) below.

$$T \geq 17.6\log(P_{O2}) + 1031 \quad \cdots (1)$$

$$700 \leq T \leq 1200 \quad \cdots (2)$$

$$P_{O2} \leq 10.13 \quad \cdots (3)$$

In expressions (1) to (3) above, T is the temperature (°C) inside the container, and $P_{O2}$ is the oxygen partial pressure (kPa) inside the container.

In order to remove zinc through volatilization, it will be effective to maintain the temperature inside the container at or above the boiling point of zinc (907°C). When, however, a galvanized steel sheet is heat-treated in the air at 1000°C, zinc is oxidized by oxygen in the air and zinc oxide is formed at a superficial portion of the zinc coating. The zinc oxide inhibits dezincification through volatilization. Furthermore, the steel sheet that is the base material is also oxidized and consequently there is a risk that the iron yield will be lowered when molten steel is manufactured using the heat-treated galvanized steel sheet as a raw material. The present inventors have then found that lowering the oxygen partial pressure in the container correspondingly reduces the adverse effects of oxygen described above and also lowers the temperature required to efficiently remove zinc from the galvanized steel sheet. Thus, the temperature and the oxygen partial pressure inside the container need to satisfy the relationship of expression (1).

However, a heating temperature below 700°C is far lower than the boiling point of zinc (907°C) and slows down the volatilization rate of zinc, causing a failure to obtain sufficient dezincification effects. If, on the other hand, the heating temperature is above 1200°C, zinc in the coated layer tends to be diffused into the steel sheet that is the base material and will form a Fe-Zn alloy phase. That is, there is a risk that zinc may mix into the base material without being volatilized. Thus, the temperature inside the container needs to satisfy the relationship of expression (2).

If the oxygen partial pressure is above 10.13 kPa, the oxidation of zinc by atmospheric oxygen cannot be suppressed and dezincification through volatilization is inhibited even when the heating temperature and the oxygen partial pressure satisfy the relationship of expression (1). Thus, the oxygen partial pressure inside the container needs to satisfy the relationship of expression (3).

As described above, the present inventors have found that zinc can be removed efficiently through volatilization while suppressing the oxidation of zinc and further of the steel sheet itself as a result of controlling the temperature and the oxygen partial pressure inside the container containing the galvanized steel sheet so as to satisfy the relationships of expressions (1) to (3). The present invention has been completed based on the finding. Hereinafter, the present invention will be described through embodiments of the present invention.

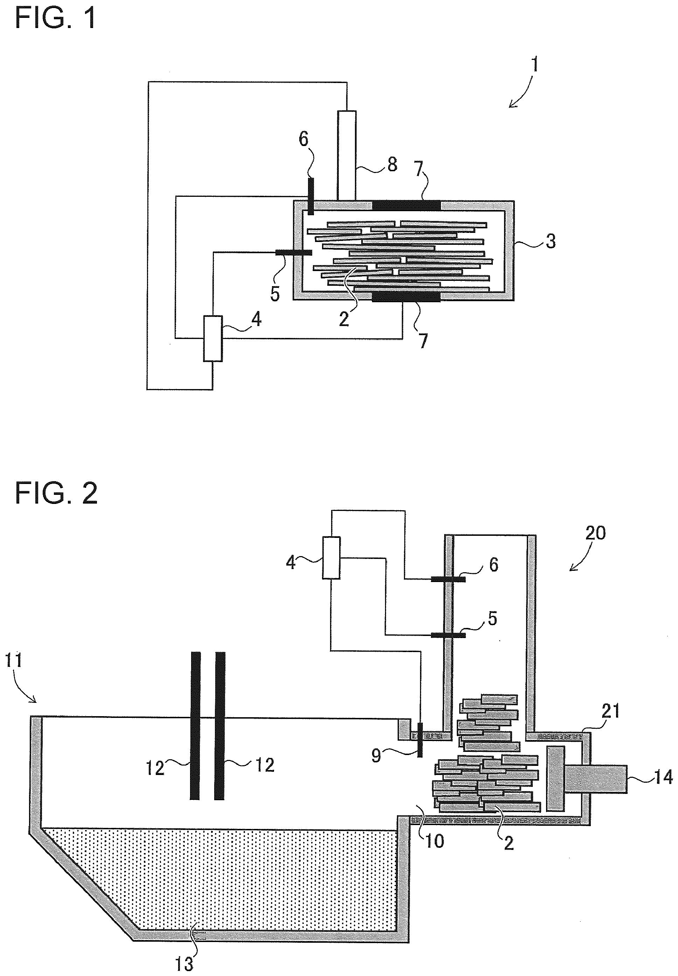

**Fig.** 1 is a schematic sectional view of a dezincing apparatus 1 capable of carrying out a dezincing method according to the present embodiment. As illustrated in Fig. 1, the dezincing apparatus 1 includes a container 3 that contains galvanized steel sheets **2,** and a control unit 4 that controls the temperature inside the container 3 and the concentration of a gas component in the container **3.** The container 3 is not limited to any particular shape or structure, and may **be,** for example, a holding container for storing scrap raw materials, such as galvanized steel sheets, or a bucket for transporting and charging scrap raw materials.

The container 3 is heated to 700°C or above and is therefore preferably formed of a heat-resistant material, such as firebricks or steel plates. The container 3 has a thermometer 5 that measures the temperature inside the container 3, a component concentration meter 6 that measures the concentration of a gas component in the container 3, a heating device 7 that heats the inside of the container 3, and an inert gas supply device 8 that supplies various gases into the container 3.

The thermometer 5 is a device that measures the temperature inside the container 3, and is, for example, a thermocouple. The component concentration meter 6 is a device that measures the concentrations of gas components, such as oxygen, CO, $CO_2$, and hydrogen, in the container 3, and is, for example, a mass spectrometer or a laser analyzer. Incidentally, the measurement limit of oxygen concentration in the air with a general component concentration meter is about 0.01 vol%, and the oxygen partial pressure that can be directly measured under atmospheric pressure is about 1.01 kPa.

When the oxygen partial pressure is expected to be less than 1.01 kPa, use may be made of a value of equilibrium oxygen partial pressure obtained when the reaction between CO gas and $CO_2$ gas is in equilibrium, or a value of equilibrium oxygen partial pressure obtained when the reaction between hydrogen gas and water vapor is in equilibrium, as shown in expressions (7) to (10) below. In other words, when the oxygen concentration in the air is below the lower measurement limit of the concentration meter and the oxygen concentration cannot be measured directly, the oxygen concentration may be calculated from expressions (7) to (10) below based on the concentrations of CO gas and $CO_2$ gas measured at the same time or the concentrations of hydrogen gas and water vapor measured at the same time.

[Chem. 1]

$$2CO + O_2 \rightleftarrows 2CO_2 \cdots \qquad (7)$$

[Math. 1]

$$\Delta G_7 = -221840 - 178.01 T_a = -RT_a \ln \frac{P_{CO2}^2}{P_{CO}^2 \cdot P_{O2}} \cdots (8)$$

[Chem. 2]

$$2H_2 + O_2 \rightleftarrows 2H_2O \cdots \qquad (9)$$

[Math. 2]

$$\Delta G_9 = -493070 + 109.88 T_a = -RT_a \ln \frac{P_{H2O}^2}{P_{H2}^2 \cdot P_{O2}} \cdots (10)$$

$\Delta G_7$ in expression (8) is the Gibbs standard free energy change (J/mol) in expression (7), and $\Delta G_9$ in expression (10) is the Gibbs standard free energy change (J/mol) in expression (9). Furthermore, $T_a$ is the absolute temperature (K), R is the gas constant (J/(mol·K)), and $P_{CO}$, $P_{CO2}$, $P_{H2}$, and $P_{H2O}$ are the CO partial pressure (kPa), the $CO_2$ partial pressure (kPa), the hydrogen partial pressure (kPa), and the water vapor partial pressure (kPa), respectively.

The heating device 7 is a device that heats the inside of the container 3. The heating device 7 may heat the inside of the container 3 by heating the galvanized steel sheets 2 stored in the container 3. For example, the heating device 7 is an electromagnetic induction heating device or an oxyfuel burner.

The inert gas supply device 8 is a device that supplies an inert gas, such as $N_2$ or Ar, into the container 3 to control the oxygen concentration in the container 3. Incidentally, the inert gas supply device 8 may be replaced by a reducing gas supply device that supplies a reducing gas, such as CO gas or hydrogen gas, or a vacuum device that evacuates the inside of the container 3 to create a reduced pressure atmosphere.

The control unit 4 is a device that controls the temperature inside the container 3 and the concentration of oxygen gas component. For example, the control unit 4 is a general purpose computer, such as a workstation or a personal computer. The control unit 4 acquires temperature data from the thermometer 5 indicating the temperature inside the container 3 and determines whether the temperature data is, for example, below the intermediate value of expression (2) (950°C). When the control unit 4 has determined that the temperature data is below 950°C, the control unit 4 outputs a heating signal to the heating device 7 and causes the heating device 7 to perform heating until the temperature inside the container 3 reaches 950°C or above. When the control unit 4 has determined that the temperature data is above 1200°C, the control unit 4 outputs a heating stop signal to the heating device 7 and causes the heating device 7 to remain idle until the temperature inside the container 3 falls below 950°C. The control unit 4 may control the temperature inside the container 3 in the manner described above.

Furthermore, the control unit 4 acquires concentration data from the component concentration meter 6 indicating the concentration of oxygen gas component in the container 3, and determines whether the oxygen partial pressure obtained from the concentration data and the data of temperature inside the container 3 acquired from the thermometer 5 satisfy the relationship of expression (1). Similarly, the control unit 4 acquires concentration data from the component concentration meter 6 indicating the concentrations of gas components in the container 3, and determines whether the oxygen partial pressure obtained from the concentration data satisfies expression (3). When the control unit 4 has determined that the oxygen partial pressure in the container 3 has increased and fails to satisfy one or both of expressions (1) and (3), the control unit 4 outputs an inert gas supply signal to the inert gas supply device 8 and causes the inert gas supply device 8 to supply an inert gas into the container 3 to lower the oxygen concentration until the temperature and the oxygen partial pressure satisfy the relationships of expressions (1) and (3). The control unit 4 may control the oxygen partial pressure inside the container 3 in the manner described above.

In the dezincing apparatus 1, the galvanized steel sheets 2 are stored in the container 3 and zinc in the galvanized steel sheets 2 is removed through volatilization. The longer the storage time in the container 3, the longer the heating time for the galvanized steel sheets 2 and larger the amount of zinc removed by volatilization. Thus, it is preferable that the galvanized steel sheets 2 be kept stored in the container 3 for 5 minutes or more, and more preferably 10 minutes or more. In this manner, more zinc can be removed from the galvanized steel sheets 2 and the ratio of zinc removal from the galvanized steel sheets 2 can be increased.

Fig. 2 is a schematic sectional view of a dezincing apparatus 20 capable of carrying out a dezincing method according to the present embodiment. In the dezincing apparatus 20, the same reference numerals will be used for features common to the dezincing apparatus 1, and overlaps in the description of such features will be omitted.

As illustrated in Fig. 2, a container 21 of the dezincing apparatus 20 is connected to an electric arc furnace 11 having graphite electrodes 12 via a regulating valve 9 and an exhaust gas passage 10. By connecting the container 21 to the electric arc furnace 11 through the exhaust gas passage 10 and thereby introducing exhaust gas generated from the electric arc furnace 11 into the container 21, the inside of the container 21 can be heated with the sensible heat of the exhaust gas. In this manner, zinc can be removed from the galvanized steel sheets 2 without using the heating device 7 or while lessening the heating with the heating device 7.

In the dezincing apparatus 20, the control unit 4 controls the opening degree of the regulating valve 9 and thereby controls the flow rate of exhaust gas flowing into the container 21 so that the temperature and the oxygen partial pressure in the container 21 will satisfy the relationships of expressions (1) to (3).

Furthermore, the container 21 has a pushing device 14 that pushes the steel sheets after zinc removal toward the electric arc furnace 11. By virtue of the container 21 having the pushing device 14, the dezinced steel sheets can be supplied to the electric arc furnace 11 while still at a high temperature. The pushing device 14 can supply the hot steel sheets as scrap raw materials to the electric arc furnace 11. Thus, the amount of thermal energy required to melt the scrap raw materials in the electric arc furnace 11 can be saved. Incidentally, the electric arc furnace 11 is an example of the melting furnaces that contain molten iron, and a converter or an induction heating furnace may be used in place of the electric arc furnace 11.

Furthermore, the container 21 and molten iron 13 stored in the electric arc furnace 11 may be closely positioned. In this manner, the sensible heat of the molten iron 13 can be used to heat the inside of the container 21. When the molten iron is refined in the electric arc furnace 11, the exhaust gas from the refining may be used to control the oxygen concentration in the container 21. Oxidizing gas supplied to the molten iron for such purposes as decarburization reacts with carbon in the molten iron to produce CO gas and $CO_2$ gas, and therefore the exhaust gas generated from such treatment has a low oxygen concentration.

When the temperature and the oxygen partial pressure in the container 21 are controlled utilizing the sensible heat of the molten iron contained in the electric arc furnace 11 and the sensible heat of the exhaust gas generated from the melting furnace, the measurements of the temperature inside the container 21 and the concentration of oxygen gas component in the container 21 may be replaced by continuous measurements of the temperature of the exhaust gas introduced into the container 21 and the concentration of oxygen gas component in the exhaust gas, and the exhaust gas that satisfies the relationships of expressions (4) to (6) below may be supplied into the container 21.

$$T_g \geq 17.6\log(P_{O2,g}) + 1031 \quad \cdots (4)$$

$$700 \leq T_g \leq 1200 \quad \cdots (5)$$

$$P_{O2,g} \leq 10.13 \quad \cdots (6)$$

In expressions (4) to (6), $T_g$ is the temperature (°C) of the exhaust gas, and $P_{O2,g}$ is the oxygen partial pressure (kPa) in the exhaust gas.

By supplying the exhaust gas that satisfies the relationships of expressions (4) to (6) to the container 21, the temperature and the oxygen partial pressure inside the container 21 are controlled so as to satisfy the relationships of expressions (1) to (3). In this manner, temperature control and atmosphere control taking place in the container 21 are no longer necessary, and the costs for the materials and utilities necessary for dezincification through volatilization can be saved. Incidentally, the temperature of the exhaust gas introduced into the container 21 and the concentration of oxygen component in the exhaust gas may be measured continuously with meters, provided on the exhaust gas passage 10, that are similar to the thermometer 5 and the component concentration meter 6. The temperature of the exhaust gas and the concentration of component in the exhaust gas may be continuously measured with these meters.

Next, the procedure of a dezincing method according to the present embodiment will be described. First, galvanized steel sheets are placed into a container in which the galvanized steel sheets are to be heat-treated. Subsequently, the oxygen partial pressure in the container is controlled to the predetermined range. For example, the oxygen partial pressure in the container may be controlled by supplying an inert gas, such as Ar gas or nitrogen gas, by supplying a reducing gas, such as CO gas or hydrogen gas, or by evacuating the inside of the container 3 to create a reduced pressure atmosphere.

Furthermore, the temperature inside the container is controlled to the predetermined range by heating the galvanized steel sheets in the container. The galvanized steel sheets in the container may be heated in any manner without limitation. For example, the heating may be performed by electromagnetic induction heating, may be performed with use of an oxyfuel burner, or, as illustrated in Fig. 2, may be performed with the sensible heat of molten iron stored in the melting furnace and/or the sensible heat of exhaust gas generated from the melting furnace.

The temperature and the oxygen partial pressure inside the container are controlled in the manner described above, and the galvanized steel sheets are stored in the container in which the temperature and the oxygen partial pressure inside the container satisfy the relationships of expressions (1) to (3). Zinc contained in the galvanized steel sheets is thereby removed through volatilization. Because the dezinced steel sheets are at a risk of being oxidized in the air, it is preferable that the steel sheets be stored while supplying an inert gas or a reducing gas into the container or while evacuating the inside of the container to a reduced pressure.

EXAMPLE 1

First, EXAMPLE 1 will be described in which a galvanized steel sheet was dezinced using a 10 kg-scale electric resistance furnace. The inside of the furnace was heated to a predetermined temperature by adjusting the output of the electric resistance furnace. Subsequently, a gas supply lance was inserted into the electric resistance furnace, and a mixture of CO gas and $CO_2$ gas was supplied from the lance. After the inside of the electric resistance furnace was purged with the CO-$CO_2$ mixed gas, a galvanized steel sheet having a zinc concentration in the coating of at least 99 mass% was charged into the electric resistance furnace. The galvanized steel sheet was then heat-treated. Inventive Examples and Comparative Examples were carried out while variously changing the temperature in the electric resistance furnace, the oxygen partial pressure, and the heat treatment time in the heat treatment. The oxygen partial pressure in the electric resistance furnace used here was a value of equilibrium oxygen partial pressure obtained when the reaction between CO gas and $CO_2$ gas reached equilibrium, as shown in expressions (7) and (8) below.

[Chem. 3]

$$2CO + O_2 \rightleftarrows 2CO_2 \cdots \qquad (7)$$

[Math. 3]

$$\Delta G_7 = -221840 - 178.01 T_a = -R T_a \ln \frac{P_{CO2}^2}{P_{CO}^2 \cdot P_{O2}} \quad \cdots (8)$$

After the lapse of a predetermined time, the galvanized steel sheet was taken out of the electric resistance furnace and was cooled to room temperature in a CO-$CO_2$ mixed gas atmosphere having the same composition as that used in the heat treatment. The galvanized steel sheet that had been heat-treated was immersed in hydrochloric acid to dissolve the zing coating portions exclusively. The solution of the zinc coating in hydrochloric acid was analyzed with an ICP emission spectrometer to quantify the zinc concentration (mg/L) in hydrochloric acid. The ratio of zinc removal from the galvanized steel sheet was calculated from the zinc concentration in hydrochloric acid. The zinc removal ratio is the difference between the zinc concentration in the galvanized steel sheet before the heat treatment and the zinc concentration in the galvanized steel sheet after the heat treatment, expressed as the percentage relative to the zinc concentration in the galvanized steel sheet before the heat treatment. Furthermore, the input energy was calculated from the product of the output of the electric resistance furnace during the treatment and the heat treatment time. Table 1 below describes the heating conditions for the galvanized steel sheet, the zinc removal ratio, and the input energy.

[Table 1]

| | Temp. in furnace | Oxygen partial pressure in furnace | Exp. (1) | Exp. (2) | Exp. (3) | Heat treatment time | Zinc removal ratio | Input energy |
|---|---|---|---|---|---|---|---|---|
| | (°C) | (kPa) | | | | (min) | (%) | (kJ) |
| Inv. Ex. 1 | 800 | $1.00 \times 10^{-20}$ | Satisfied | Satisfied | Satisfied | 3 | 83.2 | 240 |
| Inv. Ex. 2 | 800 | $1.00 \times 10^{-20}$ | Satisfied | Satisfied | Satisfied | 5 | 91.4 | 400 |
| Inv. Ex. 3 | 800 | $1.00 \times 10^{-20}$ | Satisfied | Satisfied | Satisfied | 10 | 99.1 | 800 |
| Inv. Ex. 4 | 1200 | $1.00 \times 10^{-30}$ | Satisfied | Satisfied | Satisfied | 3 | 99.6 | 360 |
| Inv. Ex. 5 | 1200 | 1.00 | Satisfied | Satisfied | Satisfied | 3 | 85.4 | 360 |
| Inv. Ex. 6 | 900 | $1.00 \times 10^{-10}$ | Satisfied | Satisfied | Satisfied | 3 | 85.1 | 270 |
| Inv. Ex. 7 | 700 | $1.00 \times 10^{-25}$ | Satisfied | Satisfied | Satisfied | 3 | 84.2 | 210 |
| Inv. Ex. 8 | 700 | $1.00 \times 10^{-30}$ | Satisfied | Satisfied | Satisfied | 3 | 87.4 | 210 |
| Comp. Ex. 1 | 650 | 20.27 | Failed | Failed | Failed | 3 | 2.6 | 195 |
| Comp. Ex. 2 | 1250 | 20.27 | Satisfied | Failed | Failed | 3 | 10.7 | 375 |
| Comp. Ex. 3 | 800 | 20.27 | Failed | Satisfied | Failed | 3 | 6.6 | 240 |
| Comp. Ex. 4 | 650 | $1.00 \times 10^{-20}$ | Failed | Failed | Satisfied | 3 | 8.3 | 195 |
| Comp. Ex. 5 | 1100 | 20.27 | Satisfied | Satisfied | Failed | 3 | 7.9 | 330 |
| Comp. Ex. 6 | 1250 | $1.00 \times 10^{-20}$ | Satisfied | Failed | Satisfied | 3 | 21.2 | 375 |
| Comp. Ex. 7 | 750 | $1.00 \times 10^{-10}$ | Failed | Satisfied | Satisfied | 3 | 14.8 | 225 |

In Inventive Examples 1 to 8, the galvanized steel sheets were heat-treated in the electric resistance furnace that satisfied the relationships of expressions (1) to (3). In Comparative Examples 1 to 7, in contrast, the galvanized steel sheets were heat-treated in the electric resistance furnace that failed to satisfy at least one of expressions (1) to (3).

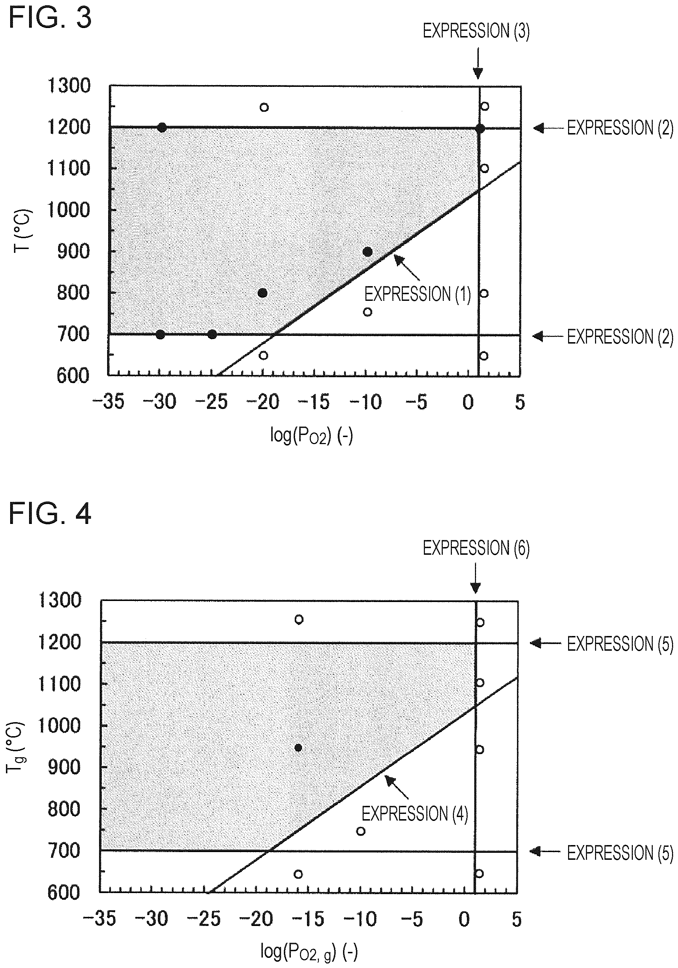

Fig. 3 is a graph illustrating the ranges of the temperature and the oxygen partial pressure in the container that satisfy the relationships of expressions (1) to (3). In Fig. 3, the horizontal axis indicates the common logarithm (-) of oxygen partial pressure, and the vertical axis indicates the temperature T (°C) in the furnace. Incidentally, (-) means dimensionless. In Fig. 3, Inventive Examples are plotted as black circles and Comparative Examples are plotted as white circles.

From Table 1 and Fig. 3, Inventive Examples 1 to 8 in which the galvanized steel sheets were heat-treated under heating conditions satisfying the relationships of expressions (1) to (3) achieved a ratio of zinc removal from the galvanized steel sheet of 80% or more. In contrast, Comparative Examples 1 to 7 in which the galvanized steel sheets were heat-treated under conditions that failed to satisfy at least one of expressions (1) to (3) resulted in less than 25% zinc removal from the galvanized steel sheet. Furthermore, as described in Table 1, the results obtained in Inventive Examples 1 to 3 showed that 90% or more zinc was removed from the galvanized steel sheet when the heat treatment time was increased to 5 minutes or more. These results have confirmed that the dezincing method according to the present embodiment can efficiently remove zinc from galvanized steel sheets.

EXAMPLE 2

Next, EXAMPLE 2 will be described in which a galvanized steel sheet was dezinced using a 100 ton-scale electric arc furnace facility. Scrap raw materials including no galvanized steel sheets were charged into the electric arc furnace. The scrap raw materials were melted by arc heating to give molten steel. Where necessary, a carbon-containing substance was added to the electric arc furnace and an oxidizing gas was supplied from the top blowing lance so that the temperature of the exhaust gas generated from the electric arc furnace and the oxygen partial pressure in the exhaust gas would be predetermined values.

The temperature of the exhaust gas was continuously measured with a thermocouple installed in the exhaust gas passage. The oxygen partial pressure in the exhaust gas was calculated in the same manner as in EXAMPLE 1 using expressions (7) and (8), based on the CO concentration and the $CO_2$ concentration in the exhaust gas continuously measured with a mass spectrometer installed in the exhaust gas passage, and the temperature of the exhaust gas.

The exhaust gas generated by the operation of the electric arc furnace was introduced into a scrap storage container that was directly connected to the furnace body of the electric arc furnace, and the inside of the scrap storage container was heated to a predetermined temperature. After the inside of the scrap storage container had been sufficiently purged with the electric arc furnace exhaust gas, a galvanized steel sheet having a zinc concentration in the coating of at least 99 mass% was charged into the scrap storage container and was heat-treated. Inventive Examples and Comparative Examples were carried out while variously changing the temperature inside the scrap storage container, the oxygen partial pressure, and the heat treatment time in the heat treatment. The zinc removal ratio in the galvanized steel sheet after the heat treatment was calculated in the same manner as in EXAMPLE 1. Table 2 describes the temperature of the exhaust gas, the oxygen partial pressure, the zinc removal ratio, and the input energy.

[Table 2]

| | Temp. of electric arc furnace exhaust gas | Oxygen partial pressure in electric arc furnace exhaust gas | Exp. (4) | Exp. (5) | Exp. (6) | Heat treatment time | Zinc removal ratio | Input energy |
|---|---|---|---|---|---|---|---|---|
| | ( °C) | (kPa) | | | | (min) | (%) | (kJ) |
| Inv. Ex. 9 | 950 | $1.00 \times 10^{-16}$ | Satisfied | Satisfied | Satisfied | 3 | 84.4 | 0 |
| Inv. Ex. 10 | 950 | $1.00 \times 10^{-16}$ | Satisfied | Satisfied | Satisfied | 5 | 92.3 | 0 |
| Inv. Ex. 11 | 950 | $1.00 \times 10^{-16}$ | Satisfied | Satisfied | Satisfied | 10 | 97.6 | 0 |
| Comp. Ex. 8 | 650 | 20.27 | Failed | Failed | Failed | 3 | 3.0 | 0 |
| Comp. Ex. 9 | 1250 | 20.27 | Satisfied | Failed | Failed | 3 | 12.4 | 0 |
| Comp. Ex. 10 | 950 | 20.27 | Failed | Satisfied | Failed | 3 | 7.6 | 0 |
| Comp. Ex. 11 | 650 | $1.00 \times 10^{-16}$ | Failed | Failed | Satisfied | 3 | 8.9 | 0 |
| Comp. Ex. 12 | 1100 | 20.27 | Satisfied | Satisfied | Failed | 3 | 8.4 | 0 |
| Comp. Ex. 13 | 1250 | $1.00 \times 10^{-16}$ | Satisfied | Failed | Satisfied | 3 | 22.3 | 0 |
| Comp. Ex. 14 | 750 | $1.00 \times 10^{-10}$ | Failed | Satisfied | Satisfied | 3 | 17.8 | 0 |

In EXAMPLE 2, the temperature and the oxygen partial pressure inside the scrap storage container are controlled by the introduction of exhaust gas and therefore the temperature and the oxygen partial pressure inside the scrap storage container are equal to the temperature and the oxygen partial pressure of the exhaust gas. That is, in Inventive Examples 9 to 11, the exhaust gas introduced into the scrap storage container satisfied the relationships of expressions (4) to (6) and consequently the inside of the scrap storage container was controlled so as to satisfy the relationships of expressions (1) to (3). In contrast, the exhaust gas introduced into the scrap storage container in Comparative Examples 8 to 14 failed to satisfy at least one of expressions (4) to (6) and consequently the conditions inside the scrap storage container did not satisfy at least one of expressions (1) to (3).

Fig. 4 is a graph illustrating the ranges of the exhaust gas temperature and the oxygen partial pressure that satisfy the relationships of expressions (4) to (6). In Fig. 4, the horizontal axis indicates the common logarithm (-) of the oxygen partial pressure in the exhaust gas, and the vertical axis indicates the exhaust gas temperature $T_g$ (°C). In Fig. 4, Inventive Examples are plotted as black circles and Comparative Examples are plotted as white circles.

In Inventive Examples 9 to 11, the galvanized steel sheet was heat-treated under conditions where the relationships of expressions (1) to (3) were satisfied by the introduction of exhaust gas satisfying the relationships of expressions (4) to (6). From Table 2 and Fig. 4, these Inventive Examples achieved a ratio of zinc removal from the galvanized steel sheet of 80% or more. In contrast, Comparative Examples 8 to 14 in which the exhaust gas that was introduced failed to satisfy at least one of expressions (4) to (6) and consequently the galvanized steel sheet was heat-treated under conditions that failed to satisfy at least one of expressions (1) to (3) resulted in less than 25% zinc removal from the galvanized steel sheet. These results have confirmed that the introduction of exhaust gas satisfying the relationships of expressions (4) to (6) into the container allows the galvanized steel sheet to be heat-treated under heating conditions that satisfy the relationships of expressions (1) to (3) and thereby the galvanized steel sheet can be efficiently dezinced. Furthermore, in EXAMPLE 2, the inside of the scrap storage container was heated with the exhaust gas from the electric arc furnace and therefore the input energy was zero. Heating of the inside of the container with the sensible heat of exhaust gas from the melting furnace saves the amount of energy that is input. Thus, the benefit of heating the inside of the container with the sensible heat of exhaust gas from the melting furnace has been confirmed. Reference Signs List

1    DEZINCING APPARATUS

2    GALVANIZED STEEL SHEET

3    CONTAINER

4    CONTROL UNIT

5    THERMOMETER

6    COMPONENT CONCENTRATION METER

7    HEATING DEVICE

8    INERT GAS SUPPLY DEVICE

9    REGULATING VALVE

10    EXHAUST GAS PASSAGE

11    ELECTRIC ARC FURNACE

12    GRAPHITE ELECTRODE

13    MOLTEN IRON

14    PUSHING DEVICE

20    DEZINCING APPARATUS

21    CONTAINER

**Claims**

1. A dezincing method for removing zinc from a galvanized steel sheet stored in a container, wherein

   a temperature and an oxygen partial pressure inside the container satisfy relationships of expressions (1) to (3) below:

   $$T \geq 17.6\log(P_{O2}) + 1031 \quad \cdots (1)$$

   $$700 \leq T \leq 1200 \quad \cdots (2)$$

   $$P_{O2} \leq 10.13 \quad \cdots (3)$$

   in expressions (1) to (3), T is the temperature (°C) inside the container, and $P_{O2}$ is the oxygen partial pressure (kPa) inside the container.

2. The dezincing method according to claim 1, wherein the galvanized steel sheet is kept stored in the container for 5 minutes or more.

3. The dezincing method according to claim 1 or 2, wherein the inside of the container is heated with sensible heat of exhaust gas generated from a melting furnace.

4. The dezincing method according to claim 3, wherein the inside of the container is heated with sensible heat of molten iron contained in the melting furnace.

5. The dezincing method according to claim 3, wherein the exhaust gas satisfies relationships of expressions (4) to (6) below and is supplied into the container,

   $$T_g \geq 17.6\log(P_{O2,g}) + 1031 \quad \cdots (4)$$

   $$700 \leq T_g \leq 1200 \quad \cdots (5)$$

   $$P_{O2,g} \leq 10.13 \quad \cdots (6)$$

   in expressions (4) to (6), $T_g$ is a temperature (°C) of the exhaust gas, and $P_{O2,g}$ is an oxygen partial pressure (kPa) in the exhaust gas.

6. A dezincing apparatus for removing zinc from a galvanized steel sheet, the dezincing apparatus comprising:

   a container configured to contain a galvanized steel sheet;
   a thermometer that measures a temperature inside the container;
   a component concentration meter that measures a concentration of a gas component in the container; and
   a control unit that controls the temperature inside the container and the concentration of a gas component in the container, wherein
   the control unit controls the temperature and the oxygen concentration inside the container so as to satisfy relationships of expressions (1) to (3) below:

   $$T \geq 17.6\log(P_{O2}) + 1031 \quad \cdots (1)$$

   $$700 \leq T \leq 1200 \quad \cdots (2)$$

   $$P_{O2} \leq 10.13 \quad \cdots (3)$$

in expressions (1) to (3), T is the temperature (°C) inside the container, and $P_{O2}$ is the oxygen partial pressure (kPa) inside the container.

7. The dezincing apparatus according to claim 6, wherein

the container is connected to an exhaust gas passage of a melting furnace configured to contain molten iron, and the control unit controls the temperature and the oxygen concentration inside the container by controlling a flow rate of exhaust gas flowing into the container.

FIG. 1

FIG. 2

## FIG. 3

## FIG. 4

## INTERNATIONAL SEARCH REPORT

| International application No. |
| --- |
| **PCT/JP2023/021718** |

### A. CLASSIFICATION OF SUBJECT MATTER

*C22B 19/30*(2006.01)i; *C22B 7/00*(2006.01)i
FI:   C22B19/30; C22B7/00 E

According to International Patent Classification (IPC) or to both national classification and IPC

### B. FIELDS SEARCHED

Minimum documentation searched (classification system followed by classification symbols)

C22B19/30; C22B7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 5-125459 A (NIPPON STEEL CORP) 21 May 1993 (1993-05-21) | 1-2, 6 |
| | claims, paragraphs [0006], [0012], [0017] | |
| A | | 3-5, 7 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 August 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/021718**

| Patent document cited in search report | | | Publication date (day/month/year) | Patent family member(s) | Publication date (day/month/year) |
|---|---|---|---|---|---|
| JP | 5-125459 | A | 21 May 1993 | (Family: none) | |

Form PCT/ISA/210 (patent family annex) (January 2015)

**REFERENCES CITED IN THE DESCRIPTION**

**Patent documents cited in the description**

- JP 2018145499 A